# EUROPÄISCHE PATENTSCHRIFT

(11) **EP 0 483 912 B1**
(45) Veröffentlichungstag und Bekanntmachung des Hinweises auf die Patenterteilung: **22.02.1995**
(21) Anmeldenummer: 91202742.2
(22) Anmeldetag: 23.10.1991
(51) Int. Cl.: G01G 3/14

(54) **Scheibenförmiger Scherkraft-Messwertaufnehmer für eine Wägezelle**
Disk-shaped shear force sensor for a load cell
Capteur de force de cisaillement de la forme d'un disque pour un élément de pesage

(30) Priorität: 31.10.1990 DE 4034629
(43) Veröffentlichungstag der Anmeldung: 06.05.1992
(73) Patentinhaber: Philips Patentverwaltung GmbH, 22335 Hamburg (DE); Philips Electronics N.V., 5621 BA Eindhoven (NL)
(72) Erfinder: Krause, Matthias, W-2000 Hamburg 73 (DE)
(74) Vertreter: Hartmann, Heinrich, Dipl.-Ing.

(56) Entgegenhaltungen:
- EP-A- 0 089 209
- EP-A- 0 191 305
- US-A- 4 546 838
- US-A- 4 702 329

## Beschreibung

Die Erfindung betrifft einen scheibenförmigen Scherkraft-Meßwertaufnehmer für eine Wägezelle, mit parallel zueinander und parallel zur Wirkrichtung einer zu messenden Kraft angeordneten Oberflächen, von denen mindestens eine einen Meßfühler zur Umwandlung einer meßkraftabhängigen Verformung in ein auswertbares Signal aufweist.

Meßwertaufnehmer dieser Art sind in der Regel Bestandteil eines Kraftaufnehmers für eine Wägezelle, der nach dem Scherspannungsprinzip arbeitet und Meßfühler besitzt.

Derartige Kraftaufnehmer sind beispielsweise aus der Broschüre "Compression Load Cells, 1986" der Firma Revere Corp. of Europe GmbH, 6382 Friedrichsdorf 2, DE, bekannt. Der Kraftaufnehmer Typ SSB aus dieser Broschüre weist einen Verformungskörper mit einer Durchgangsöffnung auf, die orthogonal zur Wirklinie der zu messenden Kraft ausgerichtet ist und einen Meßwertaufnehmer etwa mittig aufnimmt. Der Meßwertaufnehmer bildet somit eine Zwischenwand, die zwei symmetrische Kammern trennt. Auf den Oberflächen des scheibenförmigen Meßwertaufnehmers sind etwa mittig Dehnungsmeßstreifen als Meßfühler angeordnet. Um die Dehnungsmeßstreifen elektrisch miteinander zu verbinden, sind Durchgangsöffnungen auf einer Mittellinie des Meßwertaufnehmers vorgesehen, die parallel zur Wirklinie der zu messenden Kraft liegt. Diese Durchgangsöffnungen dienen ebenfalls dazu, die Steifigkeit des Meßwertaufnehmers einzustellen.

Die Arbeitsgenauigkeit eines solchen Kraftaufnehmers ist von der Linearität und besonders von der Hysterese des Meßwertaufnehmers abhängig. Die Linearität wird praktisch allein durch die geometrischen Verhältnisse bestimmt. Dagegen ist die Hysterese, also die Tatsache, daß das Ausgangssignal eines verformten Körpers vom vorhergehenden Verlauf, insbesondere vom Betrag und der Änderungsrichtung einer Verformungsgröße abhängig ist, eine Werkstoffeigenschaft und folglich vom Werkstoff abhängig. Da der werkstoffbedingte Hystereseanteil auch bei Verwendung besonders ausgewählter Werkstoffe nicht völlig verschwinden kann, wird die Genauigkeit von bekannten Kraftaufnehmern begrenzt, was besonders im Hinblick auf ihre eichpflichtige Verwendung nachteilig ist.

Bei bekannten Kraftaufnehmern besteht die Gefahr, daß deren gewünschte Genauigkeit bei einer Überlastung verlorengeht.

Der vorliegenden Erfindung liegt die Aufgabe zugrunde, einen Meßwertaufnehmer für eine Wägezelle zu schaffen, der ein quasi hysteresefreies, eichfähiges und auswertbares Signal liefert, wenn er über mindestens einen Meßfühler abgetastet wird.

Diese Aufgabe wird erfindungsgemäß dadurch gelöst, daß die Oberfläche des Meßwertaufnehmers vier durch eine Mittellinie parallel zur Wirkrichtung der Kraft und einer hierzu orthogonalen Mittellinie gebildete Teilflächen aufweist, von denen mindestens zwei sich nur in einem Punkt am nächsten liegende Teilflächen je einen Bereich mit verringertem Querschnitt zur Beeinflussung des Hystereseeffekts aufweisen.

Überraschenderweise hat sich bei Versuchen gezeigt, daß eine erfindungsgemäße Ausbildung des Meßwertaufnehmers mit Bereichen mit verringertem Querschnitt bzw. verringerter Dicke geeignet ist, durch eine Umlenkung und/oder Konzentration des Kraftflusses im Meßaufnehmer, eine Reduzierung der materialabhängigen Hysterese zu erzeugen. Bei Überlastungsversuchen hat sich ferner gezeigt, daß erfindungsgemäße Meßwertaufnehmer besonders unempfindlich sind gegen Überlastung, so daß Meßwertaufnehmer zur Verfügung stehen, die im eichpflichtigen Bereich gut eingesetzt werden können.

Bei einer besonderen Ausgestaltung der Erfindung ist vorgesehen, daß die im größten Kraftfluß liegenden Teilflächen des Meßwertaufnehmers je einen Bereich mit verringertem Querschnitt aufweisen. Den Kompensationseffekt der Hysterese verstärkend, kann auch vorgesehen sein, daß alle vier Teilflächen einen Bereich mit verringertem Querschnitt aufweisen. Bei solchen erfindungsgemäßen Meßwertaufnehmern hat sich gezeigt, daß nicht nur jeder beliebige materialabhängige Hystereseeffekt kompensiert werden kann, sondern sogar ein Verhalten des Meßfühlers möglich ist, daß dem Vorhandensein einer negativen Hysterese gleichkommt.

Die Verkleinerung der Hysterese hat zur Folge, daß dadurch Meßwertaufnehmer mit sehr kleinen Abweichungen vom streng linearen Verhalten realisierbar sind, was besonders für eichfähige Aufnehmer von Vorteil ist.

Gemäß einer bevorzugten Ausgestaltung der Erfindung kann der Meßwertaufnehmer kreisrund ausgebildet sein, also in Richtung der orthogonalen Mittellinie mit je einem halbkreisförmigen Abschnitt enden.

Vorteilhaft können Durchgangsöffnungen mit kreisförmigem Querschnitt die Bereiche mit verringertem Querschnitt in den Teilflächen bilden. Der Mittelpunkt dieser Durchgangsöffnungen liegt vorteilhaft auf einem Radius, der mit einer der Mittellinien einen Winkel von 45° ± 15° bildet. Der Durchmesser der Durchgangsöffnungen in den Teilflächen entspricht vorteilhaft 10 bis 30 % des Durchmessers des kreisrunden Meßwertaufnehmers, bzw. der halbkreisförmigen Abschnitte.

Gemäß einer vorteilhaften Ausgestaltung der Erfindung kann vorgesehen sein, daß der Meßwertaufnehmer Durchgangsöffnungen auf beiden Seiten des Mittelpunktes der Abschnitte auf der parallel zu der Wirkrichtung der Kraft liegenden Mittellinie im Randbereich des Meßwertaufnehmers aufweist. Diese Durchgangsöffnungen haben zwar nur einen geringen Einfluß auf die zu kompensierende Hysterese, bieten jedoch die Möglichkeit zur Aufnahme von Verbindungselementen, wie Leitungen für die beispielsweise als Dehnungsmeßstreifen ausgebildeten Meßfühler, die auf beiden Oberflächen des Meßwertaufnehmers angeordnet sein können. Ferner dienen diese Durchgangsöffnungen der Anpassung der Steifheit, bzw. der Empfindlichkeit des Meßwertaufnehmers und haben hierzu vorteilhaft einen maximalen Durchmesser von 40 % des Durchmessers des kreisförmigen Meßwertaufnehmers, bzw. der halbkreisförmigen Abschnitte.

Gemäß einer vorteilhaften Ausgestaltung der Erfindung hat der Meßwertaufnehmer einen rechteckigen Abschnitt zwischen den zwei halbkreisförmigen Abschnitten, die den beiden Hälften eines kreisförmigen Meßwertaufnehmer entsprechen. Die Mittelpunkte der Durchgangsöffnungen in den entsprechenden Teilflächen sind bei dieser Ausgestaltung der Erfindung in einem Bereich angeordnet, der durch die orthogonale Mittellinie, den 45°-Radius, einen angrenzenden Kreisbogenabschnitt eines halbkreisförmigen Abschnitts und einer angrenzenden Diagonalen des rechteckigen Abschnitts umgrenzt wird.

Vorteilhaft kann vorgesehen sein, daß der Meßfühler aus einer Meßbrückenschaltung aufgebaut ist und als Dehnungsmeßstreifen, bzw. durch Dünnfilmtechnik auf die Oberfläche des Meßwertaufnehmers aufgebracht ist, der seinerseits aus hochwertigem Material gefertigt sein kann.

Ein erfindungsgemäßer Meßwertaufnehmer kann überdies quasi in allen praktisch vorkommenden Scherkraftaufnehmern eingesetzt werden und mit diesem auch einstückig ausgebildet sein.

Weitere vorteilhafte Ausgestaltungen der Erfindung ergeben sich aus den Unteransprüchen.

Ein Ausführungsbeispiel wird nachfolgend unter Bezugnahme auf eine Zeichnung näher erläutert. Darin zeigt:
- Fig. 1: einen Kraftaufnehmer einer Wägezelle mit einem erfindungsgemäßen kreisförmigen Meßwertaufnehmer,
- Fig. 2: eine Seitenansicht von Fig. 1 gemäß Linie B-B,
- Fig. 3: einen modifizierten Kraftaufnehmer mit einem modifizierten Meßwertaufnehmer,
- Fig. 4: einen S-förmigen Kraftaufnehmer mit einem erfindungsgemäßen kreisförmigen Meßwertaufnehmer, und
- Fig. 5: den Fehler durch Hysterese in Abhängigkeit der zu messenden Kraft.

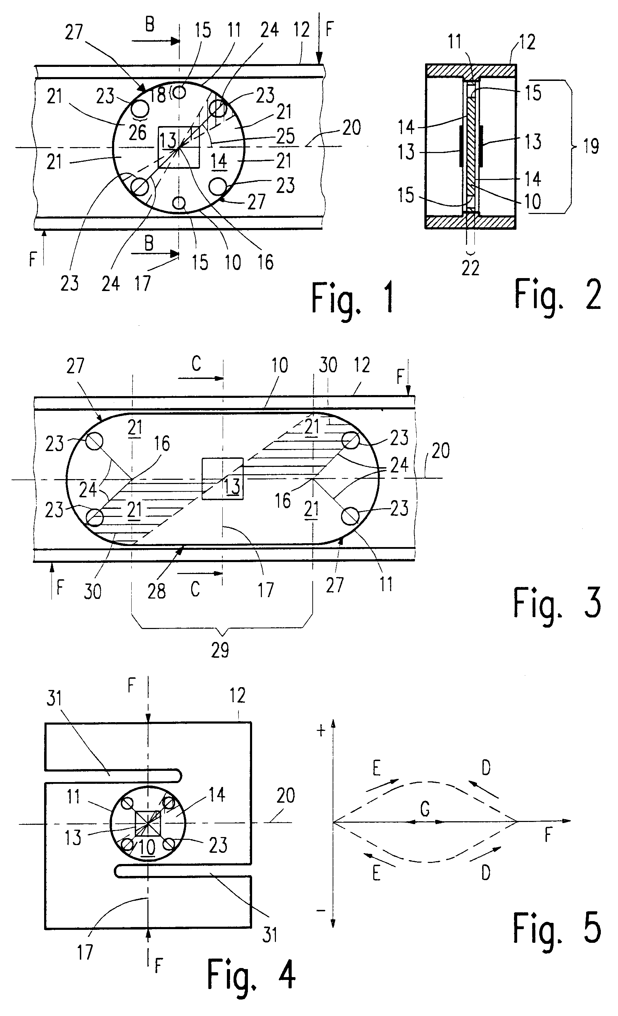

Fig. 1 zeigt einen erfindungsgemäßen scheibenförmigen Meßwertaufnehmer 10, der auf seiner Kante stehend in einer Durchgangsöffnung 11 eines Kraftaufnehmers 12 angeordnet ist. Der dargestellte Kraftaufnehmer 12 ist mit einer Kraft F als Scherkraftaufnehmer belastet. Der Meßwertaufnehmer 10 ist in der Durchgangsöffnung 11 des Kraftaufnehmers 12 eingeschweißt, eingeklebt, eingepreßt o.dgl. und weist etwa mittig auf jeder seiner zueinander parallelen Oberflächen 14 einen Meßfühler 13 auf. Der Meßwertaufnehmer 10 und der Kraftaufnehmer 12 können auch einstückig ausgebildet sein.

Die Meßfühler 13 sind als Meßbrückenschaltung aufgebaut und als Dehnungsmeßstreifen, bzw. durch Dünnfilmtechnik auf die Oberflächen 14 des Meßwertaufnehmers 10 aufgebracht. Sie dienen dazu, die vom Verformungskörper, also dem Kraftaufnehmer 12 auf den Meßwertaufnehmer 10 übertragenen meßkraftabhängigen Verformungen in ein vorzugsweise elektrisches, auswertbares Signal umzuwandeln. Zur Verbindung der auf beiden Oberflächen 14 angeordneten Meßfühler 13 sind üblicherweise Durchgangsöffnungen 15 auf beiden Seiten des Mittelpunktes 16 des Meßwertaufnehmers 14 auf einer Mittellinie 17 angeordnet, die parallel zur Wirkrichtung der Kraft F liegt. Die Durchgangsöffnungen 15 sind vorzugsweise im Randbereich des Meßwertaufnehmers 14 angeordnet. Hierdurch dienen sie ferner der Anpassung der Steifigkeit, bzw. Empfindlichkeit des Meßwertaufnehmers 14. Die Durchgangsöffnungen 15 haben vorzugsweise einen Durchmesser 18 von maximal 40 % des Durchmessers 19 (siehe Fig. 2) des vorzugsweise kreisförmigen Meßwertaufnehmers 10.

Der Meßwertaufnehmer 10 ist durch die Mittellinie 17 und einer hierzu orthogonal verlaufenden Mittellinie 20 in vier Teilflächen 21 aufgeteilt. Mindestens zwei dieser Teilflächen 21, die sich nur im Mittelpunkt 16 berühren, bzw. sich nur in einem Punkt am nächsten liegen, weisen einen Bereich mit verringertem Querschnitt bzw. verringerter Dicke auf. Hier sei angemerkt, daß der Meßwertaufnehmer 10 an sich einen konstanten Querschnitt 22 bzw. eine konstante Dicke aufweist (siehe Fig. 2).

Vorteilhaft ist es, wenn mindestens diejenigen Teilflächen 21, die entsprechend der Einleitung der Kraft F im größten Kraftfluß liegen, jeweils einen Bereich mit verringertem Querschnitt aufweisen. Ferner ist es vorteilhaft, alle vier Teilflächen 21 mit einem Bereich mit verringertem Querschnitt zu versehen, da sich dadurch der gewünschte, die Hysterese vermindernde Effekt verstärken läßt.

Die Bereiche mit verringertem Querschnitt des Meßwertaufnehmers 10 werden vorzugsweise durch Durchgangsöffnungen 23 mit kreisförmigem Querschnitt gebildet. Der Mittelpunkt der Durchgangsöffnungen 23 liegt vorzugsweise auf einem Radius 24, der mit einer der Mittellinien 17 oder 20 und dem Mittelpunkt 16 einen Winkel 25 von 45° ± 15 ° aufweist. In Fig. 1 und 4 ist dieser Bereich schraffiert angedeutet. Die Durchgangsöffnungen 23 in den Teilflächen 21 weisen vorzugsweise einen Durchmesser 26 von 10 bis 30 % des Durchmessers 19 des kreisförmigen Meßwertaufnehmers 10, bzw. der halbkreisförmigen Abschnitte 27 auf.

Die Fig. 2 zeigt einen Schnitt der Fig. 1 entlang der Linie B-B. Deutlich zu erkennen ist der Querschnitt des Kraftaufnehmers 12, der in seinem mittleren Abschnitt eine Durchgangsöffnung 11 aufweist, in welcher der Meßwertaufnehmer 10 angeordnet und befestigt ist. Der Querschnitt 22 bzw. die Dicke des Meßwertaufnehmers 10 ist an sich konstant. Auf dem Meßwertaufnehmer 10 sind im mittleren Bereich auf dessen Oberflächen 14 je ein Meßfühler 13 mittig angeordnet. Um eine Verbindung für nicht dargestellte Verbindungsleitungen der Meßfühler 13 auf der einen und der anderen Oberfläche 14 des Meßwertaufnehmers 10 zu gewährleisten, sind in der Fig. oberhalb und unterhalb der Meßfühler 13 Durchgangsöffnungen 15 vorgesehen. Diese dienen darüber hinaus der Anpassung der Steifigkeit, bzw. der Empfindlichkeit des Meßwertaufnehmers 10. Hier sei darauf hingewiesen, daß die in den Fig. 1 bis 3 gewählte Form eines Kraftaufnehmers 12 nur beispielhaft ist und der erfindungsgemäße Meßwertaufnehmer 10 auch in einen anderen Kraftaufnehmer 12 mit einer anderen Formgebung eingesetzt werden kann, wie er beispielsweise in Fig. 4 dargestellt ist.

In Fig. 3 ist ein Kraftaufnehmer 12 dargestellt, der weitgehend dem in Fig. 1 und 2 dargestellten entspricht, jedoch einen Meßwertaufnehmer 10 aufweist, der in Richtung der orthogonalen Mittellinie 20 mit halbkreisförmigen Abschnitten 27 endet und zwischen diesen ein rechteckiger Abschnitt 28 angeordnet ist. Ein solcher Kraftaufnehmer 12 ist hinsichtlich der Steifigkeit, bzw. Empfindlichkeit besonders günstig und kann ebenfalls mit erfindungsgemäßen Durchgangsöffnungen 23 in den entsprechend ergänzten Teilflächen 21 versehen sein. Die Mittelpunkte der Durchgangsöffnungen 23 sind vorzugsweise in den Teilfächen 21 in dem in Fig. 3 schraffierten Bereich 30 angeordnet. D.h. in einem Bereich 30, der durch die orthogonale Mittellinie 20, den 45°-Radius 24, einen anschließenden Bogenabschnitt des Abschnittes 27 und durch eine Diagonale des Abschnittes 28 begrenzt ist. Der Bereich der Meßfühler 13, die mittig im rechteckigen Abschnitt 28 angeordnet sind, ist allerdings ausgenommen. Entlang der Mittellinie 20 weist der rechteckige Abschnitt 28 eine Länge 29 auf.

Eine optimale Position der Durchgangsöffnungen 23 im zulässigen Bereich 30 ergibt sich in Abhängigkeit der Meßgitter der Meßfühler 13, also von deren innerem Aufbau. Mit Ausnahme der Durchgangsöffnungen 15 entspricht die Ansicht gemäß Fig. 2 dem Schnitt C-C der Fig. 3.

Wie bereits erwähnt, zeigt Fig. 4 eine weitere Variante eines Kraftaufnehmers 12, der, wie dargestellt, quadratische aber auch kreisrunde Ausmaße aufweisenden kann und einen erfindungsgemäßen Meßwertaufnehmer 10 enthält. Es handelt sich hierbei um einen S-förmigen Kraftaufnehmer 12, der besonders gut für Druck- und Zugkräfte geeignet ist, und diese durch seine schlitzartigen Ausnehmungen 31 in eine Scherkraftbelastung umwandelt, die dann auf einen zentrisch angeordneten Meßwertaufnehmer 10, etwa entsprechend dem in Fig. 1 dargestellten Meßwertaufnehmer 10, einwirkt.

Hier sei angemerkt, daß der Meßfühler 13 aus einer Meßbrückenschaltung aufgebaut sein kann und als Dehnungsmeßstreifen, bzw. durch Dünnfilmtechnik auf die Oberfläche 14 des Meßwertaufnehmers 10 aufgebracht sein kann, der seinerseits aus hochwertigem Material gefertigt ist.

Fig. 5 zeigt ein rechtwinkliges Koordinatenkreuz, auf dessen Ordinate der Hysteresefehler und auf dessen Abszisse die Kraft F aufgetragen ist. Der Hysteresefehler ist jeweils auf den Endwert der Kraft F bezogen. Die Pfeile D deuten einen normalen Verlauf des Hysteresefehlers an, d.h. die Hysterese bei Belastung eines Meßwertaufnehmers, der nicht erfindungsgemäß ist. Die Pfeile E geben den Verlauf der Hysteresefehler bei einem erfindungsgemäß ausgestalteten Meßwertaufnehmer 10 an. Es ist deutlich zu erkennen, daß der Verlauf des Hysteresefehlers beim erfindungsgemäßen Meßwertaufnehmer 10 vollständig umgekehrt sein kann. Der Verlauf gemäß Pfeil E stellt somit eine Überkompensation des Hystereseeffektes dar. Durch erfindungsgemäße Auslegung, z.B. der Durchgangsöffnungen 23 und der Anordnung dieser, läßt sich jede Zwischenlage zwischen diesen beiden Extrema realisieren, also auch der Verlauf des Hysteresefehlers entsprechend den Pfeilen G, d.h. der Meßwertaufnehmer 10 ist quasi hysteresefrei.

Dadurch sind für eichfähige Kraftaufnehmer sehr kleine Linearitätsfehler realisierbar. Hohe Überlastungen sind darüber hinaus unschädlich für die Genauigkeit des Kraftaufnehmers, die normalerweise, also bei nicht erfindungsgemäßen Meßwertaufnehmern, zu einer bleibenden Vergrößerung der Hysterese führen. Hier sei erwähnt, daß zur Steigerung der Empfindlichkeit in gewissem Maße auch die Durchgangsöffnungen 15 zusätzlich immer vorgesehen sein können, so daß ein erfindungsgemäßer hysteresearmer, bzw. hysteresefreier Kraftaufnehmer auch sechs Durchgangsöffnungen entsprechend Fig. 1 aufweisen kann.

## Patentansprüche

1. Scheibenförmiger Scherkraft-Meßwertaufnehmer (10) für eine Wägezelle mit parallel zueinander und parallel zur Wirkrichtung einer zu messenden Kraft angeordneten Oberflächen (14), von denen mindestens eine einen Meßfühler (13) zur Umwandlung einer meßkraftabhängigen Verformung in ein auswertbares Signal aufweist,
dadurch gekennzeichnet,
daß die Oberfläche (14) des Meßaufnehmers (10) vier durch eine Mittellinie (17) parallel zur Wirkrichtung der Kraft (F) und einer hierzu orthogonalen Mittellinie (20) gebildete Teilflächen (21) aufweist, von denen mindestens zwei sich nur in einem Punkt am nächsten liegende Teilflächen (21) je einen Bereich mit verringertem Querschnitt zur Beeinflussung des Hystereeffekts aufweisen.

2. Meßwertaufnehmer nach Anspruch 1,
dadurch gekennzeichnet, daß die zwei im größten Kraftfluß liegenden Teilflächen (21) je einen Bereich mit verringertem Querschnitt aufweisen.

3. Meßwertaufnehmer nach Anspruch 2,
dadurch gekennzeichnet, daß alle vier Teilflächen (21) einen Bereich mit verringertem Querschnitt aufweisen.

4. Meßwertaufnehmer nach Anspruch 3,
dadurch gekennzeichnet, daß der Meßwertaufnehmer (10) aus zueinander und in Richtung der orthogonalen Mittellinie (20) ausgerichteten halbkreisförmigen Abschnitten (27) aufgebaut ist.

5. Meßwertaufnehmer nach Anspruch 4,
dadurch gekennzeichnet, daß Durchgangsöffnungen (23) die Bereiche mit verringertem Querschnitt bilden und kreisförmigen Querschnitt haben und deren jeweiliger Mittelpunkt auf einem Radius (24) liegt, der mit der horizontalen Mittellinie (20) einen Winkel (25) von 45° ± 15° bildet.

6. Meßwertaufnehmer nach Anspruch 5,
dadurch gekennzeichnet, daß die Durchgangsöffnungen (23) in den Teilflächen (21) einen Durchmesser (26) von 10 bis 30 % des Durchmessers der halbkreisförmigen Abschnitte (27) aufweisen.

7. Meßwertaufnehmer nach Anspruch 6,
dadurch gekennzeichnet, daß der Meßwertaufnehmer (10) Durchgangsöffnungen (15) auf beiden Seiten des Mittelpunktes (16) der Abschnitte (27) auf der parallel zur Wirkrichtung der Kraft (F) weisenden Mittellinie (17) im Randbereich aufweist zur Aufnahme von Verbindungsleitungen für die auf den beiden Oberflächen (14) angeordneten Meßfühler (13) und zur Anpassung der Steifheit bzw. Empfindlichkeit des Meßwertaufnehmers (10).

8. Meßwertaufnehmer nach Anspruch 7,
dadurch gekennzeichnet, daß die Durchgangsöffnungen (15) auf der Mittellinie (17) einen Durchmesser (18) von maximal 40 % des Durchmessers der halbkreisförmigen Abschnitte (27) aufweisen.

9. Meßwertaufnehmer nach einem oder mehreren der vorhergenden Ansprüche,
dadurch gekennzeichnet, daß der Meßwertaufnehmer (10) einen rechteckigen Abschnitt (28) mit einer Länge (29) zwischen den halbkreisförmigen Abschnitten (27) aufweist, und daß die Durchgangsöffnungen (23) in den entsprechend erweiterten Teilflächen (21) in einem Bereich (30) angeordnet sind, der von der Mittellinie (20), dem 45°-Radius (24), einer Diagonalen des rechteckigen Abschnitts (28) und einem Bogenabschnitt des Abschnitts (27) und umgrenzt ist, der den Radius (24) mit der Diagonalen verbindet.

## Claims

1. A disc-shaped shear force sensor (10) for a weighing cell, comprising surfaces (14) which extend parallel to one another and parallel to the direction of application of a force to be measured, on at least one of said surfaces there being provided a sensing element (13) for converting a force-dependent deformation into a useful signal, characterized in that the surface (14) of the sensor (10) comprises four sub-faces (21) which are formed by a centre line (17) parallel to the direction of application of the force (F) and a centre line (20) which is orthogonal thereto, at least two of said sub-faces (21) which adjoin one another in only one point comprising a respective area of reduced cross-section in order to influence the hysteresis effect.

2. A sensor as claimed in Claim 1, characterized in that the two sub-faces (21) which are situated in the densest flux of force comprise a respective area of reduced cross-section.

3. A sensor as claimed in Claim 2, characterized in that all four sub-faces (21) comprise an area of reduced cross-section.

4. A sensor as claimed in Claim 3, characterized in that the sensor (10) consists of semi-circular sections (27) which are aligned with respect to one another in the direction of the orthogonal centre line (20).

5. A sensor as claimed in Claim 4, characterized in that apertures (23) constitute the areas of reduced cross-section and have a circular cross-section, their respective centre point being situated on a radius (24) which encloses an angle (25) of 45° ± 15° with respect to the orthogonal centre line (20).

6. A sensor as claimed in Claim 5, characterized in that the apertures (23) in the sub-faces (21) have a diameter (26) amounting to from 10 to 30% of the diameter of the semi-circular sections (27).

7. A sensor as claimed in Claim 6, characterized in that in the edge zone of the sensor (10) there are provided apertures (15), situated to both sides of the centre (16) of the sections (27) on the centre line (17) extending parallel to the direction of application of the force (F), in order to receive connection leads for the sensing elements (13) arranged on both surfaces (14) and to adapt the rigidity or sensitivity of the sensor (10).

8. A sensor as claimed in Claim 7, characterized in that the apertures (15) on the centre line (17) have a diameter (18) which amounts to at the most 40% of the diameter of the semi-circular sections (27).

9. A sensor as claimed in one or more of the preceding Claims, characterized in that the sensor (10) comprises a rectangular sections (28) having a length (29) between the semi-circular sections (27), the apertures (23) being provided in the correspondingly enlarged sub-faces (21) in an area (30) which is enclosed by the centre line (20), the 45° radius (24), a diagonal of the rectangular section (28) and segment of arc of the section (27) which connects the radius (24) to the diagonal.

## Revendications

1. Transducteur de mesure (10) en forme de disque pour force de cisaillement pour une cellule de pesée, comportant des surfaces (14) parallèles entre elles et parallèles à la direction d'action d'une force à mesurer, une au moins de ces surfaces comportant un capteur de mesure (13) pour la conversion d'une déformation dépendant de la force mesurée en un signal utilisable, caractérisé en ce que, la surface (14) du transducteur de mesure (10) présente quatre surfaces partielles (21) délimitées par une ligne médiane (17) parallèle à la ligne d'action de la force (F) et une ligne médiane perpendiculaire à celle-ci, dont au moins deux de ces surfaces partielles (21) ne se touchant qu'en un point présentent chacune une région de moindre section ou de moindre épaisseur afin d'influencer l'effet d'hystérésis.

2. Transducteur de mesure suivant la revendication 1, caractérisé en ce que les deux surfaces partielles (21) situées sur le cheminement principal de la force présentent chacune une région de moindre section.

3. Transducteur de mesure suivant la revendication 2, caractérisé en ce que toutes les quatre surfaces partielles (21) présentent une région de moindre section.

4. Transducteur de mesure suivant la revendication 3, caractérisé en ce que le transducteur de mesure (10) est constitué de parties semi-circulaires (27) orientées l'une vers l'autre et en direction de la ligne médiane perpendiculaire (20).

5. Transducteur de mesure suivant la revendication 4, caractérisé en ce que des ouvertures de passage (23) délimitent les régions de moindre section et ont une section circulaire et que leur point central se situe chaque fois sur un rayon (24), qui forme un angle (25) de 45 ° ± 15° avec la ligne médiane horizontale (20).

6. Transducteur de mesure suivant la revendication 5, caractérisé en ce que les ouvertures de passage (23) ont dans les surfaces partielles (21) un diamètre (26) de 10 à 30% du diamètre des parties semi-circulaires (27).

7. Transducteur de mesure suivant la revendication 6, caractérisé en ce que le transducteur de mesure (10) présente sur le bord, des deux côtés du point central (16) des parties (27), sur la ligne médiane (17) située parallèlement à la ligne d'action de la force (F), des ouvertures de passage (15) pour le placement de fils de raccordement pour les capteurs de mesure (13) disposés sur les deux surfaces (14) et le réglage de la raideur ou de la sensibilité du transducteur de mesure (10).

8. Transducteur de mesure suivant la revendication 7, caractérisé en ce que les ouvertures de passage (15) présentent sur la ligne médiane (17) un diamètre (18) de maximum 40% du diamètre des parties semi-circulaires (27).

9. Transducteur de mesure suivant une ou plusieurs des revendications précédentes, caractérisé en ce que le transducteur de mesure (10) présente une partie rectangulaire (28) de longueur (29) entre les parties semi-circulaires (27), et que les ouvertures de passage (23) sont disposées dans les surfaces partielles correspondantes (21) dans une région (30) qui est délimitée par la ligne médiane (20), le rayon à 45° (24), une diagonale de la partie rectangulaire (28) et un morceau d'arc de la partie (27), qui relie le rayon (24) avec la diagonale.
